# FASCICULE DE BREVET EUROPEEN

(11) **EP 0 818 872 B1**
(45) Date de publication et mention de la délivrance du brevet: **12.12.2001**
(21) Numéro de dépôt: 97401612.3
(22) Date de dépôt: 07.07.1997
(51) Int. Cl.: H02K 7/116, H02K 5/22, H02K 23/66, B60S 1/08

(54) **Motoréducteur avec plaque porte-lamelles**
Getriebemotor mit Träger für Lamellenkontakte
Geared motor with contact blade supporting plate

(30) Priorité: 08.07.1996 FR 9608469
(43) Date de publication de la demande: 14.01.1998
(73) Titulaire: VALEO SYSTEMES D'ESSUYAGE, 78321 La Verrière (FR)
(72) Inventeur: Gerrand, Dominique, 86540 Thure (FR); Moreau, Bruno, 86100 Chatellerault (FR)
(74) Mandataire: Le Forestier, Eric

(56) Documents cités:
- FR-A- 2 720 704
- US-A- 5 218 255
- US-A- 5 309 053

## Description

La présente invention concerne les motoréducteurs pour essuie-glace de véhicule automobile,

On connaît d'après le document US-5 218 255 un motoréducteur pour essuie-glace de véhicule automobile comportant un moteur, un réducteur, un socle de réducteur, et une plaque de fermeture destinée à être fixée au socle. Cette plaque comporte une partie formant connecteur destinée à recevoir le faisceau électrique du véhicule pour l'alimentation et la commande du motoréducteur. La plaque comporte des lamelles métalliques sur lesquelles la matière de la plaque est surmoulée. Les extrémités des lamelles émergent de la plaque. Certaines de ces extrémités constituent des frotteurs en contact électrique avec un organe mobile du réducteur, des bornes de connexion du moteur ou des fiches s'étendant dans le connecteur. Ainsi, les lamelles connectent entre eux le moteur, le réducteur et le connecteur. Le surmoulage de la plaque sur les lamelles entraîne une bonne isolation de la partie médiane des lamelles à l'égard de la corrosion et des courts-circuits. De plus, la plaque incluant les lamelles est facile à monter sur le motoréducteur. Cependant, le procédé de surmoulage est relativement lourd et complexe à mettre en oeuvre. De plus, les lamelles ont une forme compliquée.

Un but de l'invention est de fournir un motoréducteur plus simple à fabriquer, et qui comporte des lamelles ayant une forme plus simple.

En vue de la réalisation de ce but, on prévoit selon l'invention un motoréducteur pour essuie-glace de véhicule automobile, comportant un moteur, un réducteur, un connecteur, un socle de réducteur, une plaque de fermeture destinée à être fixée au socle et des lamelles conductrices associées à la plaque et destinées à connecter électriquement entre eux le moteur, le réducteur et le connecteur, le motoréducteur comportant en outre un couvercle adapté à être fixé à une face de la plaque de fermeture avec interposition des lamelles entre cette face et le couvercle, la plaque et le couvercle étant configurés pour définir un boîtier fermé contenant les lamelles.

Ainsi, l'isolation de la partie médiane des lamelles est réalisée par simple assemblage de la plaque de fermeture et du couvercle. Les lamelles sont protégées de la corrosion et des court-circuits à l'intérieur du boîtier. Ce motoréducteur est donc simple à fabriquer. Les lamelles interposées entre le couvercle et la plaque peuvent avoir une forme simple.

Avantageusement, la plaque de fermeture présente un premier orifice traversant et le couvercle présente un deuxième orifice traversant, la plaque de fermeture et le couvercle étant configurés de sorte que les deux orifices définissent un évent en labyrinthe.

La réalisation de cet évent est considérablement facilitée par le fait que l'évent est constitué en deux parties d'une part sur le couvercle et d'autre part sur la plaque de fermeture destinés à être assemblés.

Avantageusement, la plaque de fermeture et le couvercle comportent des moyens de retenue des lamelles en position.

Ainsi, la fixation des lamelles est réalisée par l'assemblage des lamelles, de la plaque et du couvercle. Il n'est pas nécessaire de prévoir des étapes de sertissage ou de soudage.

Avantageusement, les lamelles comportent des tronçons s'étendant dans le connecteur en définissant des fiches de connexion.

Ainsi, on limite le nombre de pièces à fabriquer et à assembler pour réaliser le motoréducteur.

De préférence, les lamelles sont pliées de sorte que les tronçons définissant les fiches ont leurs faces s'étendant en regard les unes des autres en étant perpendiculaires à un plan général de la plaque, et de sorte que les lamelles comportent des tronçons s'étendant dans un plan commun parallèle au plan général de la plaque.

On réalise ainsi une disposition des lamelles particulièrement peu encombrante tout en donnant aux lamelles une forme simple à réaliser.

Avantageusement, la plaque de fermeture présente une ouverture traversante, les lamelles comportant des tronçons traversant cette ouverture pour constituer des frotteurs destinés à venir en appui contre un organe mobile du réducteur, le couvercle comportant des pattes s'étendant en saillie d'une face interne du couvercle et disposées pour venir en appui contre les frotteurs.

Le couvercle contribue ainsi à assurer un bon contact des frotteurs avec l'organe du réducteur.

Avantageusement, la plaque de fermeture et le couvercle comportent des moyens de fixation par clipsage du couvercle à la plaque de fermeture.

D'autres caractéristiques et avantages de l'invention apparaîtront encore à la lecture de la description suivante d'un mode de réalisation préféré donné à titre d'exemple non-limitatif. Aux dessins annexés:
- la figure 1 est une vue en perspective du motoréducteur;
- les figures 2 et 3 sont des vues en perspective montrant respectivement la face externe et la face interne de la plaque de fermeture;
- la figure 4 est une vue en plan de la face externe de la plaque de fermeture;
- les figures 5 et 6 6 sont des vues en perspective montrant respectivement la face externe et la face interne du couvercle;
- la figure 7 est une vue en plan de la face interne du couvercle;
- la figure 8 est une vue en plan des lamelles;
- la figure 9 est une vue de côté d'une portion de lamelle formant un frotteur;
- la figure 10 est une vue de côté d'une portion de lamelle formant une borne de connexion du moteur;
- la figure 11 est une vue de côté d'une portion de lamelle formant un «U»;
- la figure 12 représente le schéma électrique associé au motoréducteur; et
- la figure 13 est une vue de détail en coupe transversale de la plaque et du couvercle montrant l'évent.

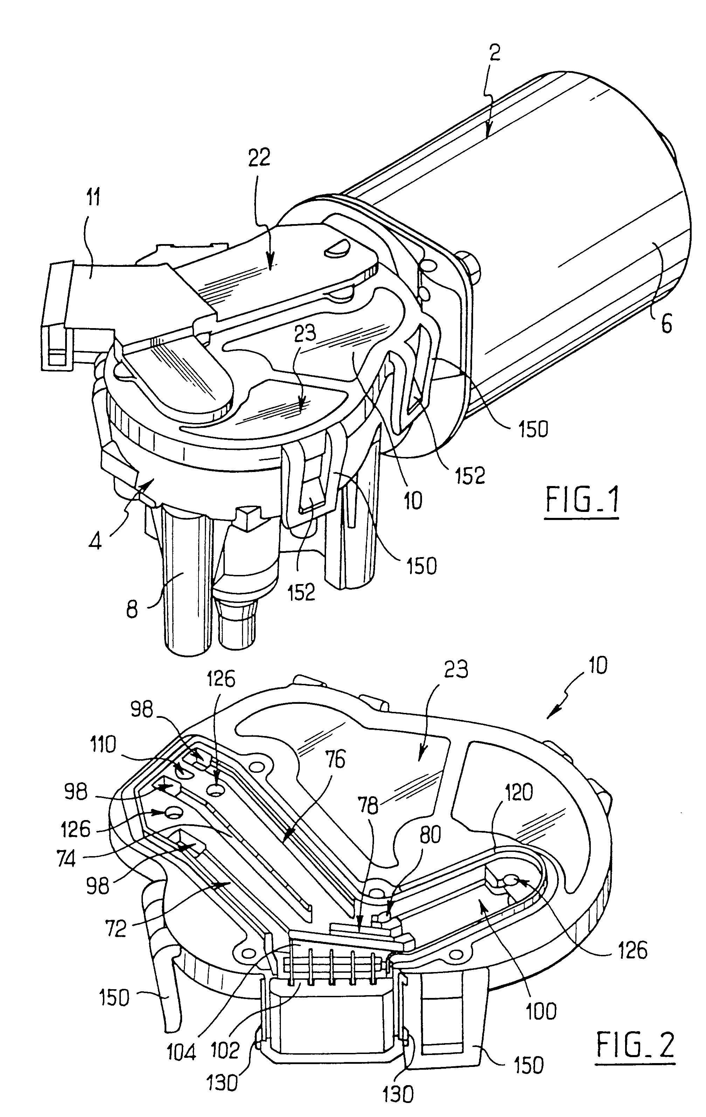

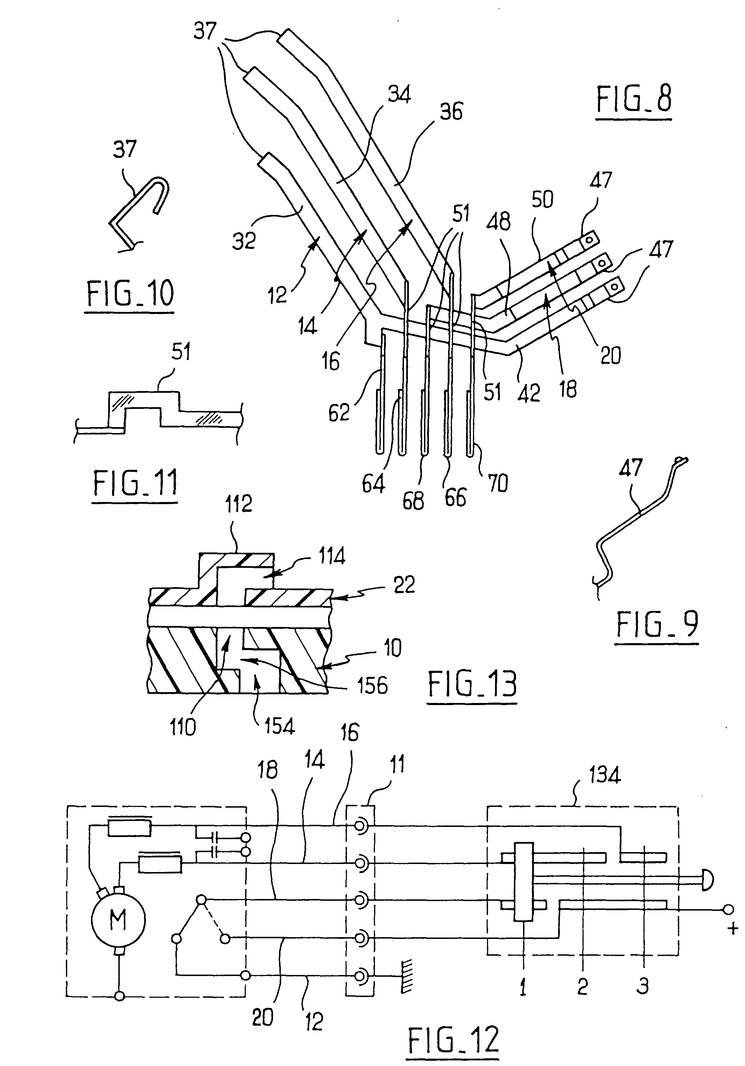

En référence à la figure 1, le motoréducteur pour essuie-glace de véhicule automobile comporte un moteur 2, et un réducteur 4. Le moteur 2 comprend une carcasse 6 de forme générale cylindrique. Le réducteur comprend un socle métallique 8, ouvert sur un côté, comportant un fond et un bord latéral. Le réducteur comprend également une plaque de fermeture 10 de forme générale plane en matière plastique destinée à être fixée au socle pour l'obturer sur son côté ouvert. Le motoréducteur comprend un connecteur 11 pour la connexion du motoréducteur à un faisceau électrique du véhicule, et, en référence à la figure 8, cinq lamelles conductrices métalliques 12, 14, 16, 18, 20 destinées à connecter électriquement entre eux le moteur, le réducteur et le connecteur. Le réducteur comporte en outre un couvercle 22 adapté à être fixé à une face externe 23 de la plaque de fermeture, à l'extérieur de celle-ci avec interposition des lamelles entre cette face et le couvercle. La plaque 10 et le couvercle 22 sont configurés pour définir un boîtier fermé contenant les lamelles.

En référence à la figure 8, les lamelles sont formées par découpe dans une tôle, puis pliage et courbure. La lamelle 12 présente en plan une forme générale en «Y», à savoir à trois branches ou tronçons reliés entre eux en un même point par une extrémité. Les autres lamelles 14, 16, 18, 20 présentent en plan une forme générale coudée, à savoir à deux branches ou tronçons.

Les lamelles 12, 14, 16 présentent des tronçons 32, 34, 36 sensiblement rectilignes et ayant leurs faces coplanaires entre elles, ces tronçons s'étendant parallèlement entre eux dans une même direction. En référence à la figure 10, les portions d'extrémité 37 de ces tronçons sont pliés d'un même côté du plan des tronçons et les extrémités de ces portions sont recourbées. Le tronçon 32 de la lamelle 12 est plus court que les tronçons 34, 36 des lamelles 14, 16 qui ont même longueur entre elles. La portion d'extrémité 37 du tronçon 32 de la lamelle 12 constitue une borne de masse destinée à venir en contact avec la paroi du socle 8 au niveau d'une face interne du bord du socle à l'intérieur du réducteur. Les portions d'extrémité 37 des tronçons 34, 36 des lamelles 14, 16 constituent des bornes de connexion du moteur destinées à venir en contact avec des conducteurs reliés à une plaque porte-balais du moteur.

Les lamelles 12, 18, 20 présentent des tronçons 42, 48, 50 coudés en vue en plan et ayant leurs faces coplanaires entre elles et avec les tronçons 32, 34, 36. En vue en plan, les portions d'extrémité 47 de ces tronçons sont sensiblement rectilignes et s'étendent parallèlement entre elles dans une même direction. En référence à la figure 9, ces portions sont pliées au moyen de quatre plis en sens contraires alternés et s'étendent d'un même côté du plan des tronçons 42, 48, 50. Les extrémités de ces portions 47 présentent un bossage sur leur face la plus externe. Ces portions d'extrémité constituent des frotteurs destinés à venir en appui contre un organe mobile du réducteur tel qu'une roue portant des pistes conductrices avec lesquelles les frotteurs viennent en contact.

Les tronçons 34, 36 et 48, 50 s'étendent d'un même côté de la lamelle 12 en «Y». Le tronçon 34 se trouve entre les tronçons 32 et 36, et le tronçon 48 se trouve entre les tronçons 42 et 50. A l'exception des portions d'extrémité formant frotteurs et bornes de connexion, les tronçons 32, 34, 36, 42, 48, 50 se trouvent dans un plan commun parallèle au plan général de la plaque 10 après assemblage.

Les lamelles 12, 14, 16, 18, 20 présentent des tronçons 62, 64, 66, 68, 70 délimités par des plis parallèles entre eux et disposés de sorte que ces tronçons ont leurs faces s'étendant en regard les unes des autres en étant perpendiculaires au plan commun précité. Ces tronçons s'étendent suivant une direction commune. En référence à la figure 11, les tronçons 64, 66, 68, 70 présentent une portion intermédiaire 51 en «U» renversé comprenant une base et deux branches, et enjambant certaines des autres lamelles. Les portions d'extrémité de ces tronçons sont repliées sur elles-mêmes de façon à doubler leur épaisseur. Ces portions d'extrémité sont destinées à s'étendre dans le connecteur 11 en constituant des fiches de connexion du connecteur.

On voit donc que sur la lamelle 12 en «Y» une première des branches comporte le tronçon 32 destiné à venir en contact avec le socle, une deuxième des branches comporte un des frotteurs 47 et une troisième des branches comporte une des fiches du connecteur.

En référence aux figures 2 à 4, la plaque de fermeture 10 présente en plan une forme générale arrondie correspondant à celle du bord du socle. La plaque présente sur une face externe cinq nervures 72, 74, 76, 78, 80 ayant une forme en plan adaptée à recevoir les tronçons coplanaires 32, 42, 34, 36, 48, 50 des lamelles respectives, une face de ces tronçons s'étendant à plat au fond de la nervure. La nervure 72 a une forme générale en plan en «Y».

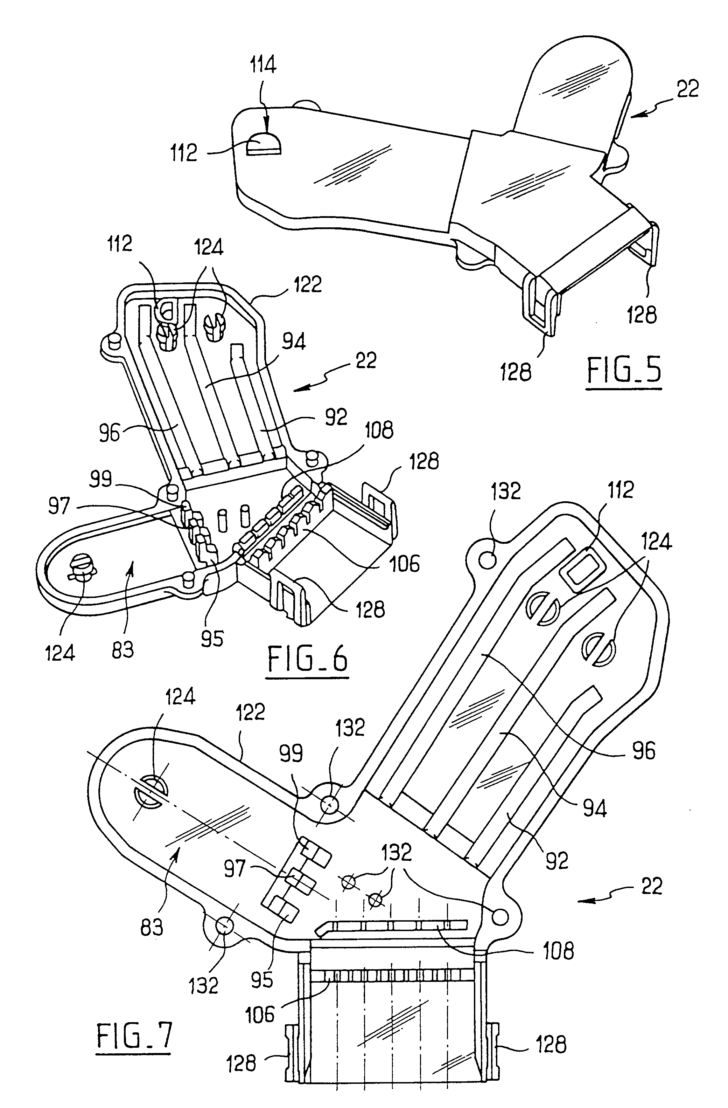

En référence aux figures 5 à 7, le couvercle est généralement plat et présente une forme en plan enveloppant le contour des lamelles. Le couvercle présente sur une face interne 83 destinée à venir en regard de la face externe 23 de la plaque, trois rainures 92, 94, 96 ayant une forme en plan symétrique de celle des nervures 72, 74, 76 et disposées de façon à venir en appui contre une face faisant face au couvercle des lamelles s'étendant dans les nervures 72, 74, 76. Ainsi, après assemblage de la plaque, des lamelles et du couvercle, les rainures et les nervures constituent des moyens de retenue en position des lamelles 12, 14, 16, les rainures maintenant les lamelles au fond des nervures.

A une extrémité des nervures 72, 74, 76 correspondant aux portions formant bornes 37, la plaque de fermeture présente trois orifices 98 respectifs traversant l'épaisseur de la plaque et traversés par les portions 37.

En regard des portions 47 formant frotteurs, la plaque de fermeture 10 présente une ouverture 100 de forme générale rectangulaire traversant l'épaisseur de la plaque. Cette ouverture est destinée à être traversée par les frotteurs 47 eux-mêmes pour venir en appui tel que précité. Le couvercle 22 comporte trois pattes 95, 97, 99 s'étendant en saillie de la face interne du couvercle et disposées pour venir en appui contre les frotteurs, au niveau de leur base en vue de maintenir cette base en contact avec la plaque 10 au bord de l'ouverture 100 malgré la réaction mécanique exercée sur les frotteurs par l'organe mobile du réducteur en sens inverse sous l'effet de l'appui.

Le connecteur 11 est défini pour partie par le couvercle 22 et pour partie par la plaque de fermeture 10, chacun de ces éléments définissant une face plane du connecteur et la moitié de ses faces latérales.

La plaque comporte un premier peigne 102 adjacent au connecteur. Le peigne s'étend en saillie de la face externe de la plaque et présente cinq encoches destinées à recevoir les tronçons 62, 64, 66, 68, 70 à la naissance des portions définissant les fiches de connexion. Le peigne est configuré de sorte que le chant inférieur des tronçons vient en appui au fond des encoches. La plaque comporte un deuxième peigne 104 distant du connecteur. Le peigne 104 s'étend en saillie de la face externe de la plaque et présente cinq encoches borgnes destinées à recevoir les tronçons 62, 64, 66, 68, 70 au niveau d'une extrémité de la branche du «U» voisine du connecteur.

Le couvercle comporte un premier peigne 106 adjacent au connecteur et constituant une face intérieure de fond du connecteur. Le peigne s'étend en saillie de la face interne du couvercle et présente cinq encoches destinées à recevoir les tronçons 62, 64, 66, 68, 70 à la naissance des portions définissant les fiches de connexion. Le peigne est configuré de sorte que le chant supérieur des tronçons vient en appui au fond des encoches. Le couvercle comporte un deuxième peigne 108 distant du connecteur. Le peigne 108 s'étend en saillie de la face interne du couvercle et présente cinq encoches destinées à recevoir les tronçons 62, 64, 66, 68, 70 au niveau de la base du «U». Les chants externes des bases des «U» sont coplanaires et viennent en appui au fond des encoches contre le couvercle. Après montage, la succession des peignes à partir du connecteur est la suivante: peigne 106 du couvercle, peigne 102 de la plaque, peigne 108 du couvercle et peigne 104 de la plaque. Les peignes constituent eux aussi des moyens de retenue des lamelles en position entre la plaque et le couvercle.

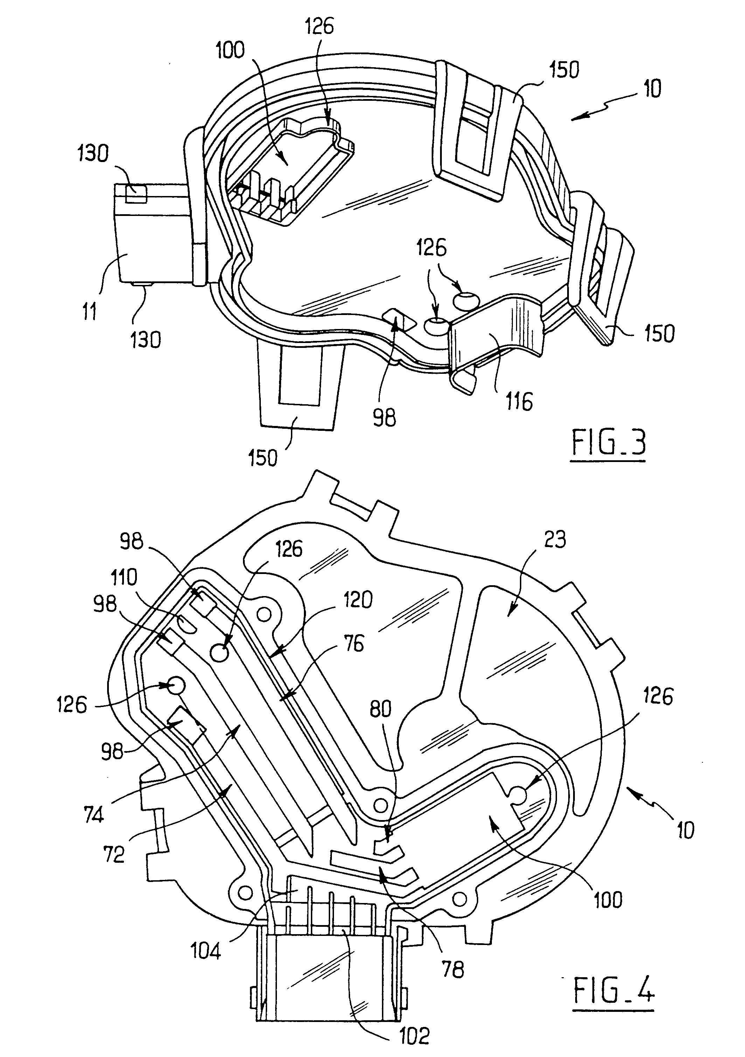

En référence à la figure 13, la plaque de fermeture présente entre les deux orifices 98 deux cavités 110, 154 s'étendant en creux respectivement depuis la face externe et la face interne de la plaque. Seule l'une 110 de ces cavités est visible sur les figures 2 et 4. Ces deux cavités sont décalés l'une par rapport à l'autre et communiquent par leur fond en définissant un orifice traversant 156 s'étendant dans un plan perpendiculaire au plan général de la plaque et en formant une chicane de part et d'autre de cet orifice. En référence aux figures 1, 5, 7 et 13, le couvercle présente un relief 112 s'étendant en saillie de la face externe du couvercle. Une face latérale de ce relief est évidée pour définir un orifice 114 s'étendant dans un plan perpendiculaire au plan général du couvercle. Les deux orifices 114, 156 ont une largeur de l'ordre de quelques dixièmes de millimètres. La chicane et l'orifice 114 forment un évent en labyrinthe assurant la ventilation du moteur et limitant l'intrusion d'eau dans le moteur par projection à partir de l'extérieur.

En référence à la figure 3, la plaque de fermeture comporte une jupe 116 s'étendant à partir de la face interne de la plaque, perpendiculairement au plan de celle-ci. La jupe a en plan une forme en «U» ouverte en direction du moteur et isolant du réducteur les portions d'extrémité 37 formant bornes des lamelles 14, 16 et l'évent de ventilation.

La plaque de fermeture présente une rainure 120 enveloppant l'emplacement des lamelles et s'étendant en saillie de la face externe de la plaque. Le couvercle comporte un bord périphérique 122 s'étendant en saillie de la face interne du couvercle. La rainure et le bord sont configurés pour être contiguës par leurs faces latérales lorsque le couvercle est fixé à la plaque.

La plaque de fermeture et le couvercle comportent des moyens de fixation par clipsage du couvercle à la plaque de fermeture. Ces moyens de clipsage comprennent trois couples de doigts 124 portés par le couvercle et s'étendant en saillie de sa face interne, les doigts de chaque couple étant mobiles élastiquement en direction l'un de l'autre et présentant un ergot sur leurs faces opposées. Chaque couple de doigts est destiné à être introduit dans un orifice 126 présenté par la plaque de fermeture. Deux des orifices 126 s'étendent à proximité de la face externe de la jupe 116 et le troisième s'étend à une extrémité de l'ouverture 100. Les moyens de clipsage comprennent également sur le couvercle au niveau de la moitié de connecteur deux pattes latérales 128 présentant un orifice, et des ergots 130 portés par la plaque de fermeture et destinés à venir en appui dans les orifices des pattes.

Le couvercle porte six pions de centrage 132 s'étendant en saillie de sa face interne et destinés à s'insérer dans des orifices de la face externe de la plaque pour leur positionnement mutuel lors de l'assemblage.

La plaque de fermeture et le couvercle pourront en outre ou alternativement être collés l'un à l'autre. Ils pourront également être soudés par ultrason. Ce collage ou ce soudage permettent de rendre étanche le boîtier à la jonction entre la plaque et le couvercle.

Après assemblage de la plaque de fermeture, des lamelles et du couvercle, la plaque 10 est fixée au socle. A cette fin, la plaque porte des pattes 150 présentant un orifice et le socle présente des ergots 152 coopérant par clipsage avec les pattes.

En référence à la figure 12, on va maintenant décrire brièvement le schéma électrique du motoréducteur pour préciser les connexions des lamelles, sachant que le principe de ce schéma est classique. On a désigné par la référence 134 l'interrupteur de commande du motoréducteur actionné par le conducteur du véhicule. Le connecteur et le motoréducteur ont été délimités en traits pointillés.

L'interrupteur de commande comprend classiquement une plaque conductrice courte inférieure, une plaque conductrice longue inférieure connectée à un potentiel positif, une plaque conductrice longue supérieure et une plaque conductrice courte supérieure. Il comprend un organe de commande pouvant occuper trois positions en assurant la connexion entre elles de certaines des plaques conductrices. En position d'arrêt 1, l'organe est en contact avec la plaque conductrice courte inférieure et la plaque conductrice longue supérieure. En position de petite vitesse 2, l'organe est en contact avec la plaque conductrice longue inférieure et la plaque conductrice longue supérieure. En position de grande vitesse 3, l'organe est en contact avec la plaque conductrice courte supérieure et la plaque conductrice longue inférieure. Le réducteur comporte comme il est bien connu un interrupteur auxiliaire pour l'arrêt fixe du balai d'essuie-glace en position basse, constitué par les pistes de la roue précitée et les frotteurs en contact avec ces pistes.

Les connexions des lamelles avec l'interrupteur de commande se font via le connecteur 11 et le faisceau électrique du véhicule reçu dans ce connecteur. La lamelle 12 est connectée aux pistes et à la masse. La lamelle 14 est connectée à la borne de petite vitesse du moteur et à la rampe longue supérieure. La lamelle 16 est connectée à la borne de grande vitesse du moteur et à la rampe supérieure courte. La lamelle 18 est connectée aux pistes et à la rampe inférieure courte. La lamelle 20 est connectée aux pistes et à la rampe inférieure longue.

La fixation des lamelles est effectuée par simple mise en place et fixation du couvercle à la plaque. Il n'est pas nécessaire de prévoir des opérations de soudage ou de sertissage.

Les conducteurs du moteur venant en contact avec les deux portions 37 des lamelles formant borne de connexion du moteur pourront être portés par une pièce de liaison traversant une ouverture d'une cloison du socle séparant le moteur et le réducteur. Cette pièce de liaison comportera un conduit débouchant en regard de l'évent et communiquant avec l'intérieur du moteur.

Bien entendu, on pourra apporter à l'invention de nombreuses modifications sans sortir du cadre de celle-ci. Les nervures pourront être portées par le couvercle et les rainures par la plaque. L'évent pourra comprendre une membrane en matière imperméable à l'eau et perméable aux gaz, obturant par exemple l'un des orifices.

L'invention pourra s'appliquer à un motoréducteur dont le moteur comporte une masse électrique distincte du socle du réducteur, un orifice supplémentaire étant alors prévu sur la plaque de fermeture pour le passage de la portion 37 de la lamelle en «Y» 12 en vue de sa connexion à la masse électrique.

## Revendications

1. Motoréducteur pour essuie-glace de véhicule automobile, comportant un moteur (6), un réducteur (4), un connecteur (11), un socle de réducteur (8), une plaque de fermeture (10) destinée à être fixée au socle et des lamelles conductrices (12, 14, 16, 18, 20) associées à la plaque et destinées à connecter électriquement entre eux le moteur, le réducteur et le connecteur, **caractérisé en ce qu'**il comporte en outre un couvercle (22) adapté à être fixé à une face de la plaque de fermeture avec interposition des lamelles entre cette face et le couvercle, la plaque et le couvercle étant configurés pour définir un boîtier fermé contenant les lamelles.

2. Motoréducteur selon la revendication 1, **caractérisé en ce que** le couvercle est fixé à une face externe (23) de la plaque de fermeture.

3. Motoréducteur selon l'une des revendications 1 à 2, **caractérisé en ce que** la plaque de fermeture présente un premier orifice traversant (156) et le couvercle présente un deuxième orifice traversant (114), la plaque de fermeture et le couvercle étant configurés de sorte que les deux orifices définissent un évent en labyrinthe.

4. Motoréducteur selon la revendication 3, **caractérisé en ce que** le couvercle présente un relief (112) s'étendant en saillie d'une face externe du couvercle, l'orifice (114) du couvercle étant porté par ce relief et s'étendant dans un plan perpendiculaire à un plan général du couvercle.

5. Motoréducteur selon l'une des revendications 3 ou 4, **caractérisé en ce que** la plaque de fermeture présente deux cavités (110, 154) définissant l'orifice de la plaque et constituant une chicane, l'orifice s'étendant dans un plan perpendiculaire à un plan général de la plaque.

6. Motoréducteur selon l'une des revendications 1 à 5, **caractérisé en ce que** la plaque de fermeture et le couvercle comportent des moyens de retenue des lamelles en position.

7. Motoréducteur selon la revendication 6, **caractérisé en ce que** les moyens de retenue comprennent sur l'un parmi la plaque de fermeture et le couvercle des nervures (72, 74, 76) destinées à recevoir les lamelles, et sur l'autre parmi la plaque de fermeture et le couvercle des rainures (92, 94, 96) destinées à venir en appui contre une face des lamelles.

8. Motoréducteur selon l'une des revendications 1 à 7, **caractérisé en ce que** les lamelles comportent des tronçons (62, 64, 66, 68, 70) s'étendant dans le connecteur (11) en définissant des fiches de connexion.

9. Motoréducteur selon la revendication 8, **caractérisé en ce que** les tronçons définissant les fiches présentent des extrémités repliées sur elles-mêmes de façon à doubler leur épaisseur.

10. Motoréducteur selon l'une des revendications 8 ou 9, **caractérisé en ce que** les lamelles sont pliées de sorte que les tronçons (62, 64, 66, 68, 70) définissant les fiches ont leurs faces s'étendant en regard les unes des autres en étant perpendiculaires à un plan général de la plaque, et de sorte que les lamelles comportent des tronçons (32, 34, 36, 42, 48, 50) s'étendant dans un plan commun parallèle au plan général de la plaque.

11. Motoréducteur selon l'une des revendications 8 à 10, **caractérisé en ce qu'**au moins l'un parmi la plaque et le couvercle comporte un peigne (102, 104, 106, 108) adjacent au connecteur, s'étendant en saillie d'une face et présentant des encoches destinées à recevoir des tronçons (62, 64, 66, 68, 70) définissant les fiches.

12. Motoréducteur selon la revendication 11, **caractérisé en ce que** le peigne est configuré de sorte que les lamelles viennent en butée par leur chant au fond des encoches.

13. Motoréducteur selon l'une des revendications 8 à 12, **caractérisé en ce que** sur certaines des lamelles, le tronçon (64, 66, 68, 70) définissant la fiche présente une zone (51) en forme de "U" renversé enjambant d'autres lamelles.

14. Motoréducteur selon la revendication 13, **caractérisé en ce que** les zones (51) en "U" comportent chacune une base, les bases ayant des chants externes coplanaires et venant en appui contre le couvercle.

15. Motoréducteur selon l'une des revendications 1 à 14, **caractérisé en ce que** la plaque de fermeture présente une ouverture traversante (100), les lamelles comportant des tronçons (47) traversant cette ouverture pour constituer des frotteurs destinés à venir en appui contre un organe mobile du réducteur, le couvercle comportant des pattes (95, 97, 99) s'étendant en saillie d'une face interne du couvercle et disposées pour venir en appui contre les frotteurs.

16. Motoréducteur selon l'une des revendications 1 à 15, **caractérisé en ce que** la plaque de fermeture présente un orifice traversant (98) et l'une (12) des lamelles présente un tronçon d'extrémité (37) traversant cet orifice et destiné à venir en contact avec le socle (8), celui-ci étant métallique.

17. Motoréducteur selon l'une des revendications 1 à 16, **caractérisé en ce que** la plaque de fermeture et le couvercle comportent des moyens de fixation par clipsage (124, 126, 128, 130) du couvercle à la plaque de fermeture.

## Claims

1. Motor/gearbox unit for a motor vehicle windscreen wiper, including a motor (6), a gearbox (4), a connector (11), a gearbox pedestal (8), a closure plate (10) intended to be fixed to the pedestal and conductive contact blades (12, 14, 16, 18, 20) associated with the plate and intended to electrically connect together the motor, the gearbox and the connector, **characterised in that** it also has a cover (22) adapted to be fixed to one face of the closure plate with the interposing of contact blades between this face and the cover, the plate and the cover being configured so as to define a closed casing containing the contact blades.

2. Motor/gearbox unit according to Claim 1, **characterised in that** the cover is fixed to an external face (23) of the closure plate.

3. Motor/gearbox unit according to one of Claims 1 to 2, **characterised in that** the closure plate has a first through orifice (156) and the cover has a second through orifice (114), the closure plate and the cover being configured so that the two orifices define a vent in the form of a labyrinth.

4. Motor/gearbox unit according to Claim 3, **characterised in that** the cover has a relief (112) extending in projection from an external face of the cover, the orifice (114) in the cover being carried by this relief and extending in a plane perpendicular to a general plane of the cover.

5. Motor/gearbox unit according to one of Claims 3 or 4, **characterised in that** the closure plate has two cavities (110, 154) defining the orifice in the plate and constituting a chicane, the orifice lying in a plane perpendicular to a general plane of the plate.

6. Motor/gearbox unit according to one of Claims 1 to 5, **characterised in that** the closure plate and the cover have means of holding the contact blades in position.

7. Motor/gearbox unit according to Claim 6, **characterised in that** the holding means comprise, on one of either the closure plate or the cover, ribs (72, 74, 76) intended to receive the contact blades, and on the other one from amongst the closure plate and the cover, grooves (92, 94, 96) intended to come into abutment against one face of the contact blades.

8. Motor/gearbox unit according to one of Claims 1 to 7, **characterised in that** the contact blades have portions (62, 64, 66, 68, 70) extending in the connector (11) whilst defining connection plugs.

9. Motor/gearbox unit according to Claim 8, **characterised in that** the portions defining the plugs have ends folded on themselves so as to double their thickness.

10. Motor/gearbox unit according to one of Claims 8 or 9, **characterised in that** the contact blades are folded so that the portions (62, 64, 66, 68, 70) defining the plugs have their faces extending opposite each other whilst being perpendicular to a general plane of the plate, and so that the contact blades have portions (32, 34, 36, 42, 48, 50) extending in a common plane parallel to the general plane of the plate.

11. Motor/gearbox unit according to one of Claims 8 to 10, **characterised in that** at least one from amongst the plate and the cover has a comb (102, 104, 106, 108) adjacent to the connector, lying projecting from one face and having notches intended to receive portions (62, 64, 66, 68, 70) defining the plugs.

12. Motor/gearbox unit according to Claim 11, **characterised in that** the comb is configured so that the contact blades come into abutment through their edge at the bottom of the notches.

13. Motor/gearbox unit according to one of Claims 8 to 12, **characterised in that**, on some of the contact blades, the portion (64, 66, 68, 70) defining the plug has a zone (51) in the form of an inverted U straddling other contact blades.

14. Motor/gearbox unit according to Claim 13, **characterised in that** the U-shaped zones (51) each have a base, the bases having coplanar external edges and coming into abutment against the cover.

15. Motor/gearbox unit according to one of Claims 1 to 14, **characterised in that** the closure plate has a through opening (100), the contact blades having portions (47) passing through this opening in order to constitute brushes intended to come into abutment against a movable member in the gearbox, the cover having lugs (95, 97, 99) extending so as to project from an internal face of the cover and disposed so as to come into abutment against the brushes.

16. Motor/gearbox unit according to one of Claims 1 to 15, **characterised in that** the closure plate has a through orifice (98) and one (12) of the contact blades has an end portion (37) passing through this orifice and intended to come into contact with the pedestal (8), the latter being metallic.

17. Motor/gearbox unit according to one of Claims 1 to 16, **characterised in that** the closure plate and the cover have means (124, 126, 128, 130) of fixing the cover to the closure plate by snapping on.

## Patentansprüche

1. Getriebemotor für einen Kraftfahrzeugscheibenwischer, umfassend einen Motor (6), ein Untersetzungsgetriebe (4), einen Verbinder (11), einen Getriebesockel (8), eine Verschlußplatte (10), die zur Befestigung am Sockel bestimmt ist, und leitende Lamellen (12, 14, 16, 18, 20), die mit der Platte verbunden und dazu bestimmt sind, den Motor, das Untersetzungsgetriebe und den Verbinder elektrisch miteinander zu verbinden, **dadurch gekennzeichnet, daß** er außerdem einen Deckel (22) umfaßt, der an einer Fläche der Verschlußplatte unter Einfügung der Lamellen zwischen dieser Fläche und dem Deckel befestigt werden kann, wobei die Platte und der Deckel so gestaltet sind, daß sie ein geschlossenes Gehäuse definieren, das die Lamellen enthält.

2. Getriebemotor nach Anspruch 1, **dadurch gekennzeichnet, daß** der Deckel an einer Außenfläche (23) der Verschlußplatte befestigt ist.

3. Getriebemotor nach einem der Ansprüche 1 bis 2, **dadurch gekennzeichnet, daß** die Verschlußplatte eine erste durchgehende Öffnung (156) aufweist und der Deckel eine zweite durchgehende Öffnung (114) aufweist, wobei die Verschlußplatte und der Deckel so gestaltet sind, daß die zwei Öffnungen einen labyrinthartigen Belüftungskanal bilden.

4. Getriebemotor nach Anspruch 3, **dadurch gekennzeichnet, daß** der Deckel eine Erhebung (112) aufweist, die sich von einer Außenfläche des Deckels aus vorstehend erstreckt, wobei die Öffnung (114) des Deckels an dieser Erhebung 'angebracht ist und sich in einer zur Gesamtebene des Deckels senkrechten Ebene erstreckt.

5. Getriebemotor nach einem der Ansprüche 3 oder 4, **dadurch gekennzeichnet, daß** die Verschlußplatte zwei Aufnahmen (110, 154) aufweist, die die Öffnung der Platte definieren und eine Blende bilden, wobei sich die Öffnung in einer zur Gesamtebene der Platte senkrechten Ebene erstreckt.

6. Getriebemotor nach einem der Ansprüche 1 bis 5, d a d u r c h **gekennzeichnet**, **daß** die Verschlußplatte und der Deckel Haltemittel umfassen, um die Lamellen in Position zu halten.

7. Getriebemotor nach Anspruch 6, **dadurch gekennzeichnet, daß** die Haltemittel an einem der Elemente Verschlußplatte und Deckel Rippen (72, 74, 76), die dazu bestimmt sind, die Lamellen aufzunehmen, und an dem anderen der Elemente Verschlußplatte und Deckel Nuten (92, 94, 96) umfassen, die dazu bestimmt sind, an einer Fläche der Lamellen zur Anlage zu kommen.

8. Getriebemotor nach einem der Ansprüche 1 bis 7, **dadurch gekennzeichnet, daß** die Lamellen Teilstücke (62, 64, 66, 68, 70) umfassen, die sich im Verbinder (11) erstrecken, wobei sie Anschlußstifte definieren.

9. Getriebemotor nach Anspruch 8, **dadurch gekennzeichnet, daß** die Teilstücke, die die Anschlußstifte definieren, Enden aufweisen, die so umgebogen sind, daß sich ihre Dicke verdoppelt.

10. Getriebemotor nach einem der Ansprüche 8 oder 9, **dadurch gekennzeichnet, daß** die Lamellen gebogen sind, so daß sich die Teilstücke (62, 64, 66, 68, 70), die die Anschlußstifte definieren, einander gegenüber erstrecken, wobei sie senkrecht zu einer Gesamtebene der Platte verlaufen, und so daß die Lamellen Teilstücke (32, 34, 36, 42, 48, 50) umfassen, die sich in einer zur Gesamtebene der Platte parallelen gemeinsamen Ebene erstrecken.

11. Getriebemotor nach einem der Ansprüche 8 bis 10, **dadurch gekennzeichnet, daß** wenigstens eines der Elemente Platte und Deckel einen dem Verbinder zugekehrten Kamm (102, 104, 106, 108) umfaßt, der sich von einer Fläche aus vorstehend erstreckt und Ausnehmungen aufweist, die dazu bestimmt sind, die Anschlußstifte definierenden Teilstücke (62, 64, 66, 68, 70) aufzunehmen.

12. Getriebemotor nach Anspruch 11, **dadurch gekennzeichnet, daß** der Kamm so gestaltet ist, daß die Lamellen mit ihrer Kante am Boden der Ausnehmungen zum Anschlag kommen.

13. Getriebemotor nach einem der Ansprüche 8 bis 12, **dadurch gekennzeichnet, daß** bei einigen der Lamellen das den Anschfußstift definierende Teilstück (64, 66, 68, 70) einen Bereich (51) in Form eines umgekehrten "U" aufweist, das andere Lamellen übergreift.

14. Getriebemotor nach Anspruch 13, **dadurch gekennzeichnet, daß** die "U"-förmigen Bereiche (51) jeweils eine Grundfläche umfassen, wobei die Grundflächen komplanare Außenkanten haben und am Deckel zur Anlage kommen.

15. Getriebemotor nach einem der Ansprüche 1 bis 14, **dadurch gekennzeichnet, daß** die Verschlußplatte eine durchgehende Öffnung (100) aufweist, wobei die Lamellen Teilstücke (47) umfassen, die durch diese Öffnung hindurchgehen, um Kontaktfinger zu bilden, die dazu bestimmt sind, an einem beweglichen Organ des Untersetzungsgetriebes zur Anlage zu kommen, während der Deckel Ansätze (95, 96, 99) umfaßt, die sich von einer Innenfläche des Deckels aus vorstehend erstrecken und die so angeordnet sind, daß sie an den Kontaktfingern zur Anlage kommen.

16. Getriebemotor nach einem der Ansprüche 1 bis 15, **dadurch gekennzeichnet, daß** die Verschlußplatte eine durchgehende Öffnung (98) aufweist und eine (12) der Lamellen ein Endteilstück (37) aufweist, das durch diese Öffnung hindurchgeht und dazu bestimmt ist, mit dem Sockel (8) in Kontakt zu kommen, wobei dieser aus Metall ausgeführt ist.

17. Getriebemotor nach einem der Ansprüche 1 bis 16, **dadurch gekennzeichnet, daß** die Verschlußplatte und der Deckel Befestigungsmittel (124, 126, 128, 130) für die durch Aufklipsen vorgenommene Befestigung des Deckels an der Verschlußplatte umfassen.
